# EUROPÄISCHE PATENTSCHRIFT

(11) **EP 2 919 089 B1**
(45) Veröffentlichungstag und Bekanntmachung des Hinweises auf die Patenterteilung: **10.05.2017**
(21) Anmeldenummer: 15158215.2
(22) Anmeldetag: 09.03.2015
(51) Int. Cl.: G05G 1/30, G05G 1/44, G05G 5/05, B60K 26/02

(54) **SICHERUNG DER ORDNUNGSGEMÄßEN FUNKTION EINES FAHRZEUGPEDALS**
SECURING THE PROPER FUNCTIONALITY OF A VEHICLE PEDAL
SÉCURITÉ DE LA FONCTION RÉGLEMENTAIRE D'UNE PÉDALE DE VÉHICULE

(30) Priorität: 10.03.2014 DE 102014103166
(43) Veröffentlichungstag der Anmeldung: 16.09.2015
(73) Patentinhaber: AB Elektronik GmbH, 59368 Werne (DE)
(72) Erfinder: Rühl, Stefan, 59368 Werne (DE)
(74) Vertreter: Kalkoff & Partner

(56) Entgegenhaltungen:
- DE-A1-102007 052 160
- US-A- 5 051 550
- US-A- 5 934 152

## Beschreibung

Die Erfindung betrifft ein Fahrzeugpedal und ein Verfahren zum Betrieb eines Fahrzeugpedals. Insbesondere betrifft die Erfindung ein Fahrzeugpedal mit mindestens zwei Rückstellelementen, deren Funktion überwacht werden soll.

Für Fahrzeugpedale, und insbesondere für Fahrpedale, d. h. Pedale zur Steuerung der Motorleistung ("Gaspedal"), sind zur Rückstellung eines gegenüber einem Grundelement auslenkbaren Betätigungselements in Richtung einer Grundstellung Rückstellelemente bekannt. Derartige Rückstellelemente umfassen üblicherweise einerseits Federelemente, mit denen eine Rückstellkraft aufgebracht wird. Andererseits können Rückstellelemente auch zusätzliche mechanische Funktionen erfüllen wie insbesondere eine Dämpfung der Rückstellbewegung zur Erzeugung einer Hysterese.

Insbesondere für Fahrpedale mit einem Sensor für die Betätigungsstellung des Betätigungselements ("E-Gas") ist es bekannt und aufgrund von Sicherheitsbestimmungen auch erforderlich, mindestens zwei Rückstellelemente vorzusehen, damit im Fall der Fehlfunktion eines Rückstellelements, bspw. bei einem Federbruch, dennoch die Rückstellung gewährleistet ist und das Betätigungselement nicht ungewollt in der Vollbetätigungsstellung verbleibt.

Allerdings hat dies zur Folge, dass ein Fahrzeugpedal mit bspw. zwei Rückstellelementen, von denen eines defekt ist, weiter betrieben werden kann. Je nach Aufmerksamkeit des Benutzers kann so unter Umständen die aufgetretene Fehlfunktion unbemerkt bleiben, so dass die vorgeschriebene Redundanz im weiteren Betrieb nicht mehr gegeben ist und ein deutlich erhöhtes Risiko einer gravierenden Fehlfunktion besteht, wie insbesondere einer unbeabsichtigten Vollbetätigung.

In der DE 10 2007 060 217 A1 ist eine Vorrichtung zum Erkennen einer Fehlfunktion eines Fahrpedals offenbart. Ein erster Kraftsensor, bspw. ein auf dem Fahrpedalhebel aufgebrachter Dehnmessstreifen, ermittelt die vom Fahrer auf den Fahrpedalhebel ausgeübte Kraft.

Ein Motor ist mit dem Fahrpedalhebel gekoppelt, um ein Moment in beliebiger Richtung darauf auszuüben. Ein zweiter Kraftsensor, bspw. Stromsensor zur Erfassung des Motorstroms, erfasst das vom Motor auf den Fahrpedalhebel ausgeübte Moment. Ein Winkelsensor erfasst die Auslenkung des Fahrpedalhebels. Eine Auswertungseinrichtung liest die Daten der Kraft- und Winkelsensoren ein und erkennt Fehlfunktionen des Fahrpedals oder des Motors. Dabei wird die Auslenkung einer Plausibilitätsprüfung unterzogen, die eine Überprüfung der Summen der auf den Fahrpedalhebel wirkenden Momente umfassen kann. So kann bspw. ein Bruch der Rückstellfeder erkannt werden.

Die US 5,051,550 dass den nächstliegenden Stand der Technik darstellt, beschreibt einen Kontrollmechanismus für einen Fußschalter eines batteriebetriebenen Aufsitzfahrzeugs für Kinder, der gewährleistet, dass eine Ein-AusSchalter in seiner ausgeschalteten Position nach dem Ausschalten verbleibt, wobei zwei Rückstellfedern vorgesehen sind, die den Schalter jeweils auf die ausgeschaltete Position hin vorspannen.

In der DE 198 48 088 A1 ist ein Betätigungselement, insbesondere ein Fahrpedal beschrieben, das gegen die Kraft einer Rückstellfeder verstellbar ist. Ein Sensor erfasst die Momentanstellung des Betätigungselements. Ein Sensor ist mit der Rückstellfeder verbunden, um die an einem Ende eingeleitete Kraft zu erfassen. In einem Beispiel erkennt ein Drucksensor, der als Dehnungsmessstreifen nach dem piezoelektrischen Prinzip ausgebildet ist einen Druckwert, wodurch auch ein Bruch der Rückstellfeder erkennbar ist.
Ein Fahrzeugpedal mit einer Vorrichtung zur berührungslosen Erfassung eines Drehwinkels oder eines linearen Weges aufgrund einer Relativbewegung von Federelementen ist in der DE 10 2007 052 160 A1 beschrieben. Ein Teil der Windungen der Federelemente bilden eine mit einer Spannungsquelle verbundene Primärspule eines Transformators aus, dessen Sekundärspule mit einer Auswerteeinrichtung zur Erzeugung eines von der Relativbewegung der Körper abhängen Signals verbunden ist. Die Federelemente sind zwei Rückstellelemente des Fahrzeugpedals, welche bei Betätigung des Pedals über ein Druckelement gespannt werden. Durch eine lineare Zwangsführung des Druckelements ist eine parallele zu den Mittelachsen der Federn verlaufende lineare Spannrichtung vorgegeben. Von den Federn werden zwei redundante Ausgangssignale geliefert. Diese ermöglichen eine Plausibilitätsprüfung, so dass eine Fehlermeldung erfolgt, wenn sich die Messsignale um mehr als eine vorgegebene Differenz unterscheiden.

Es ist Aufgabe der Erfindung, ein Fahrzeugpedal und ein Betriebsverfahren hierfür vorzusehen, mit denen bei einfachem Aufbau Fehlfunktionen von Rückstellelementen erkennbar sind.

Die Aufgabe wird gelöst durch ein Fahrpedal gemäß Anspruch 1 und ein Verfahren gemäß Anspruch 13. Abhängige Ansprüche beziehen sich auf vorteilhafte Ausführungsformen der Erfindung. Ein erfindungsgemäßes Fahrzeugpedal ist zunächst allgemein aufgebaut mit einem Grundelement, das üblicherweise ortsfest im Kfz festliegt, und einem daran beweglich angeordneten Betätigungselement, bspw. einer Pedalplatte. Das Betätigungselement kann in beliebiger Weise gegenüber dem Grundelement beweglich sein, wobei es in einem Betätigungsbereich auslenkbar ist, der begrenzt ist durch eine Grundstellung, die eingenommen wird, wenn keine äußeren Kräfte auf das Betätigungselement wirken, und einer Vollbetätigungsstellung, die die maximale Auslenkung darstellt. Das Fahrzeugpedal kann von beliebiger Bauform sein, bspw. ausgebildet als hängendes oder stehendes Pedal. Das Pedal kann verschiedene Pedalfunktionen erfüllen, bspw. auch als Bremse, wobei allerdings ein Fahrpedal bevorzugt ist.

Weiter enthält das erfindungsgemäße Fahrzeugpedal mindestens zwei Rückstellelemente, mit denen die Rückstellung des Betätigungselements in Richtung der Grundstellung bewirkt wird. Die Rückstellelemente umfassen bevorzugt jeweils mindestens eine Feder von beliebiger Ausgestaltung. Weiter können die Rückstellelemente, wie nachfolgend noch näher erläutert wird, einzeln oder beide mit zusätzlichen mechanischen Elementen und Funktionen versehen sein, insbesondere zur Dämpfung der Bewegung des Betätigungselements.

Um einen Defekt an einem der Rückstellelemente erkennen zu können, ist erfindungsgemäß eine Konstruktion vorgesehen, bei der die Rückstellelemente an verschiedenen, voneinander im Abstand angeordneten Ansatzpunkten auf ein Gleichlaufelement wirken. Dieses ist so ausgebildet und angeordnet, dass es bei gleichzeitiger Beaufschlagung durch die ordnungsgemäß funktionierenden Rückstellelemente eine Gleichlauflage einnimmt, d. h. eine Position und/oder Ausrichtung, insbesondere gegenüber dem Grundelement, an der stets erkannt werden kann, dass Gleichlauf gegeben ist. Dabei ist die Wirkung der Rückstellelemente auf das Gleichlaufelement so ausgebildet, dass dieses bei einem Defekt eines der Rückstellelemente durch die dann veränderte Kraftwirkung aus der Gleichlauflage ausgelenkt wird.

Erfindungsgemäß ist weiter eine Lageerfassungsvorrichtung zur Erfassung der Lage des Gleichlaufelements vorgesehen. Hierdurch kann ermittelt werden, ob sich das Gleichlaufelement in der Gleichlauflage befindet, oder ob es aus dieser Gleichlauflage ausgelenkt wurde und keine Gleichlauflage mehr einnimmt. Dabei ist es allerdings nicht notwendig, dass die vollständige Auswertung und Erkennung der Gleichlauflage innerhalb des Fahrzeugpedals erfolgt, sondern nur, dass diese Erkennung und Auswertung durch Elemente des Fahrzeugpedals ermöglicht wird. Die Signalauswertung und Entscheidung sowie eine angemessene Reaktion hierauf (bspw. Fehlersignal, Signalisierung an den Fahrer, etc.) selbst kann einerseits ganz oder zum Teil durch eine Baueinheit des Fahrzeugpedals selbst erfolgen, ebenso aber auch ganz oder zum Teil außerhalb des Fahrzeugpedals. Insbesondere kann vorgesehen sein, dass durch einen Sensor am Fahrzeugpedal eines oder mehrere Signale erzeugt werden, aus denen eine nachgeschaltete separate Einheit, bspw. das Motorsteuergerät eines Kfz, die Gleichlauflage bzw. die daraus ausgelenkte Lage des Gleichlaufelements erkennen und geeignet darauf reagieren kann.

Mit der erfindungsgemäßen Vorrichtung und dem erfindungsgemäßen Verfahren, bei dem die Lage des Gleichlaufelements überwacht wird und bei einer vorgegebenen Abweichung von der Gleichlauflage ein Defekt signalisiert wird, kann im Betrieb des Fahrzeugpedals stets erkannt werden, ob beide Rückstellelemente ordnungsgemäß funktionieren. Verändert sich die Kraftwirkung eines der Rückstellelemente in erheblichem Maße gegenüber der Kraftwirkung des anderen Rückstellelements, so gerät das Gleichlaufelement durch die abweichende Kraftwirkung in eine aus der Gleichlauflage ausgelenkte Lage. Dies wird erfasst, so dass die Fehlfunktion eines der Rückstellelemente erkannt wird und entsprechend signalisiert bzw. geeignet behandelt werden kann.

Die Erfindung ermöglicht somit die Überwachung der ordnungsgemäßen Rückstellfunktion anhand ihrer Kraftwirkung. Dabei ist eine direkte Erfassung der einzelnen Kräfte nicht erforderlich, so dass keine krafterfassenden Sensoren wie bspw. Dehnungsmessstreifen etc. verwendet werden müssen. Die Auslenkung des Gleichlaufelements lässt sich bspw. mit bekannten Dreh- oder Linearpositionssensoren erfassen.

Erfindungsgemäß ist das Gleichlaufelement so angeordnet, dass es sich bei Bewegung des Betätigungselements gegenüber dem Grundelement ebenfalls bewegt. Dabei bewegt es sich mit dem Betätigungselement, d. h. folgt dessen Bewegung. Bevorzugt sind ein erster Betätigungssensor für die Stellung eines ersten Teils des Gleichlaufelements und ein zweiter Betätigungssensor für die Stellung eines zweiten Teils des Gleichlaufelements vorgesehen. Diese Betätigungssensoren können bei der bevorzugt synchronen Bewegung des Gleichlaufelements mit der Bewegung des Betätigungselements jeweils als Betätigungssensor für das Betätigungselement dienen, d. h. die Betätigungsstellung des Betätigungselements innerhalb des Betätigungsbereichs ermitteln. Durch die separate Erfassung von zwei Teilen des Gleichlaufelements kann durch Vergleich der Signale der Betätigungssensoren dabei auch die Lage des Gleichlaufelements ermittelt werden. Somit ist es möglich, dass die Lageerfassungsvorrichtung realisiert wird durch den ersten und zweiten Betätigungssensor und durch eine Vorrichtung zur Ermittlung einer Abweichung zwischen Signalen des ersten und zweiten Betätigungssensors. Bspw. kann im Normalfall ordnungsgemäß arbeitender Rückstellelemente von beiden Betätigungssensoren ein zumindest im Wesentlichen (d. h. bis auf vorgegebene Abweichungen) gleiches Signal erzeugt werden, wenn sich das Gleichlaufelement bei seiner Bewegung innerhalb des Betätigungsbereiches in der Gleichlauflage befindet. Im Fall der Fehlfunktion eines Rückstellelements wird das Gleichlaufelement aus der Gleichlauflage ausgelenkt. Durch diese Auslenkung bewegen sich die beiden Teile des Gleichlaufelements, die von dem ersten und zweiten Betätigungssensor erfasst werden, in unterschiedlicher Weise. Damit ergibt sich in diesem Fall eine Abweichung zwischen den Signalen der Betätigungssensoren, die - wenn sie oberhalb einer definierten Schwelle liegt - die Fehlfunktion anzeigt.

Diese bevorzugte Ausführung hat den Vorteil, dass für die Erkennung von Fehlfunktionen der Rückstellelemente kein separater Sensor benötigt wird, sondern lediglich die Signale von zwei Kanälen eines zwei-kanaligen Betätigungssensors geeignet ausgewertet werden. Die Verwendung von redundanten Betätigungssensoren ist als Sicherheitsmerkmal ohnehin sinnvoll und zum Teil vorgeschrieben. Dadurch, dass nicht direkt das Betätigungselement, sondern ein hieran in seiner Lage veränderliches Gleichlaufelement an zwei verschiedenen Positionen erfasst wird, kann somit die Fehlfunktion eines Rückstellelements erkannt werden, ohne dass erheblicher zusätzlicher Aufwand erforderlich ist.

Gemäß einer besonders bevorzugten Ausführung wirken die Rückstellelemente mindestens im Wesentlichen in parallelen Richtungen auf das Gleichlaufelement. Dieses kann bevorzugt so angeordnet sein, dass es bei Einwirkung beider Rückstellelemente in einer Gleichgewichtslage quer zur Wirkrichtung der Rückstellelemente steht, während es bei einem Defekt an einem der Rückstellelemente aus der Gleichgewichtslage verkippt wird. Diese Verkippung erfolgt durch die im Defektfall unterschiedliche Krafteinwirkung der beiden Rückstellelemente. Bspw. im Fall eines Federbruchs an einem der Rückstellelemente und entsprechendem Wegfall bzw. Verminderung der am ersten Ansatzpunkt einwirkenden Kraft wird die unverändert am zweiten Ansatzpunkt einwirkende Kraft des zweiten Rückstellelements das Gleichlaufelement aus der Gleichgewichtslage verkippen.

Bevorzugt weisen die Rückstellelemente jeweils mindesten ein Federelement auf, weiter bevorzugt als Druckfeder. Die Rückstellelemente können auch jeweils mindestens ein Dämpfungselement aufweisen.

Bevorzugt ist ein Sensor für die Betätigungsstellung des Betätigungselements vorgesehen. Wie bereits erläutert kann der Betätigungssensor redundant aufgebaut sein, d. h. zwei getrennte Betätigungssensoren umfassen. Dabei ist es möglich, dass die Lageerfassungsvorrichtung keinen separaten Sensor verwendet, sondern Signale der beiden Betätigungssensoren geeignet auswertet.

Gemäß einer Weiterbildung der Erfindung weist ein am Fahrzeugpedal vorgesehener Sensor ein Indexelement auf, das gegenüber einem Erfassungselement beweglich ist. Die Position des Indexelements relativ zum Erfassungselement wird erfasst. Das von dem Sensor gelieferte Sensorsignal enthält die Information über die Position des Indexelements relativ zum Erfassungselement. Bspw. kann ein solcher Sensor als induktiver Sensor ausgebildet sein, bei dem entlang des Erfassungselements eine Spulenanordnung vorgesehen ist, bspw. umfassend mindestens eine Erregerspule und mindestens eine Empfängerspule. Das Indexelement bewirkt eine veränderliche induktive Kopplung abhängig von seiner Position. Als Indexelement kann bspw. ein Leiterstück, eine Spule oder - besonders bevorzugt - ein Schwingkreis verwendet werden, so dass die Kopplung frequenzselektiv ist. Letzteres erleichtert die getrennte Erfassung von zwei Indexelementen.

Ein solcher Sensor mit Erfassungselement und Indexelement kann vorgesehen sein als Betätigungssensor, d. h. zur Feststellung der Betätigungsstellung des Betätigungselements, aber ebenso auch als Lageerfassungsvorrichtung. Bevorzugt sind zwei solcher Sensoren vorgesehen, d. h. es wird bevorzugt die Position von mindestens zwei Indexelementen ermittelt. Dies kann durch zwei getrennte Erfassungselemente, ebenso aber auch durch ein gemeinsames Erfassungselement erfolgen.

Für die Lageerfassungsvorrichtung sind bevorzugt zwei Indexelemente im Abstand voneinander am Gleichlaufelement vorgesehen. Durch Erfassung der Position dieser beiden Indexelemente kann sowohl die Position als auch die Lage des Gleichlaufelements ermittelt werden.

Gemäß einer alternativen Ausführungsform kann auch vorgesehen sein, dass das Erfassungselement am Gleichlaufelement angeordnet ist. Die kann vorteilhaft sein, wenn ein feststehendes Gleichlaufelement verwendet wird, d.h. wenn das Gleichlaufelement sich nicht mit dem Betätigungselement bewegt, sondern bspw. ortsfest (aber in der Lage variabel) am Grundelement angeordnet ist. Dann kann das Erfassungselement des Sensors am Gleichlaufelement vorgesehen sein, so dass es ebenfalls seine Lage ändert, wenn das Gleichlaufelement aus der Gleichlauflage ausgelenkt wird. Auch auf diese Weise kann erreicht werden, dass derselbe Sensor einerseits zur Feststellung der Betätigungsstellung des Betätigungselements dient und andererseits als Lagesensor die Lage des Gleichlaufelements ermittelt.

Nachfolgend wird eine Ausführungsform der Erfindung anhand von Zeichnungen näher beschrieben. Dabei zeigen:
- Fig. 1: in schematischer Seitenansicht eine erste Ausführungsform eines Fahrzeugpedals in Grundstellung;
- Fig. 2: in schematischer Seitenansicht das Fahrzeugpedal aus Fig. 1 in einer Betätigungsstellung;
- Fig. 3: in Form eines teilweise schematischen Blockschaltbildes eine Vorrichtung zur Signalauswertung eines Sensors des Fahrzeugpedals aus Fig. 1, Fig. 2;
- Fig. 4: in schematischer Seitenansicht das Fahrzeugpedal aus Fig. 1, Fig. 2 im Fall des Defekts eines Rückstellelements.

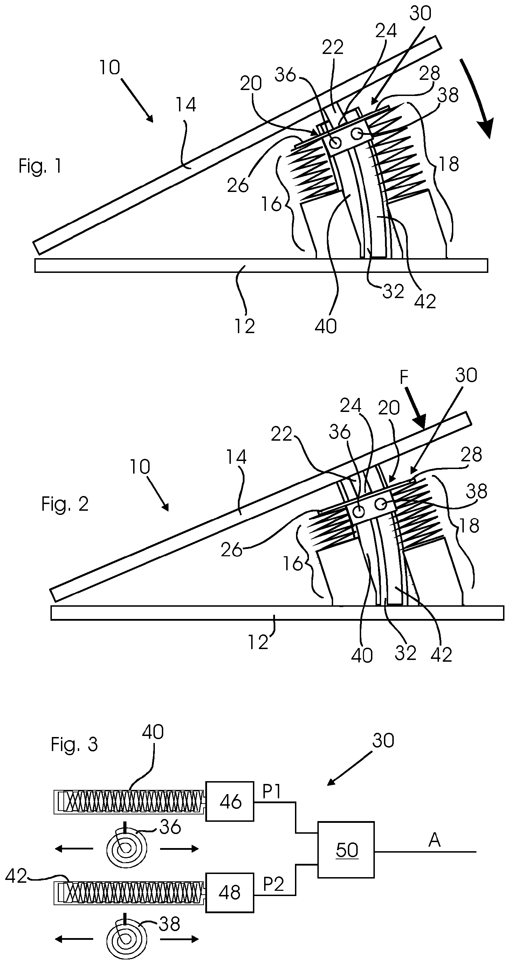

Fig. 1 zeigt schematisch in einer Seitenansicht ein Fahrpedal 10 mit einem ortsfest im Fußraum eines Kraftfahrzeugs angeordneten Grundelement 12 und einer gegenüber dem Grundelement 12 verschwenkbaren Pedalplatte (Betätigungselement) 14. Die Pedalplatte 14 ist gegen die Wirkung von zwei Rückstellelementen 16, 18 aus der in Fig. 1 gezeigten Grundstellung innerhalb eines Betätigungsbereiches verschwenkbar in Richtung des Pfeils in Fig. 1 angeordnet.

Fig. 2 zeigt das Fahrpedal 10 in einer Betätigungsstellung, in der die Pedalplatte 14 durch Kraftwirkung F in eine Betätigungsstellung geschwenkt ist, in der Federelemente der Rückstellelemente 16, 18 zusammengedrückt sind.

In den in Fig. 1, Fig. 2 schematisch gezeigten Beispielen einer Pedalkonstruktion wirken die Rückstellelemente 16, 18 nicht direkt auf die Pedalplatte 14, sondern mittelbar über ein Gleichlaufelement 20, das mit einem Anlagepunkt 24 an einem Vorsprung 22 an der Unterseite der Pedalplatte 14 anliegt. Beidseits des Anlagepunktes 24 sind Feder-Anlagepunkte 26, 28 vorgesehen, an denen die Federn der Rückstellelemente 16, 18 anliegen.

Die von den Rückstellelementen 16, 18 auf das Gleichlaufelement 20 wirkenden Rückstellkräfte werden so an den beiden im Abstand voneinander angeordneten Stellen 26, 28, aufgebracht. Wie nachfolgend näher erläutert ist das Gleichlaufelement so beweglich, dass es verkippen kann, und bildet somit eine Waage zum Vergleich der Rückstellkräfte.

Das Gleichlaufelement 20 ist einerseits bei Bewegung der Pedalplatte 14 innerhalb des Betätigungsbereichs frei mit dieser beweglich. Dabei wird es durch den Vorsprung 22 an der Pedalplatte 14 bei der Betätigung entgegen der Wirkung der Rückstellelemente 16, 18 verschoben.

Weiter ist das Gleichlaufelement 20 auch in seiner Lage veränderlich, nämlich im gezeigten Beispiel schwenkbar.

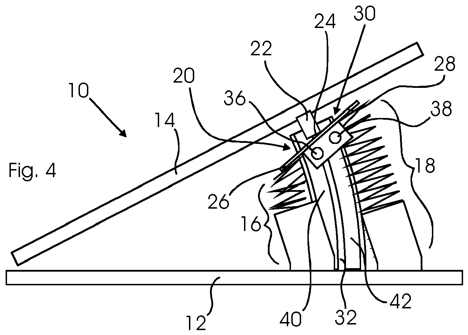

Wie in Fig. 1, Fig. 2 gezeigt, nimmt das Gleichlaufelement 20 bei Einwirkung beider Rückstellelemente 16, 18 eine Gleichlauflage ein, in der es quer zur Wirkrichtung der Rückstellelemente 16, 18 steht. Fällt die Kraftwirkung eines der Rückstellelemente 16, 18 aufgrund eines Defekts weg oder vermindert sich stark, wie beispielhaft in Fig. 4 für einen Federbruch am Rückstellelement 16 gezeigt, verkippt das Gleichlaufelement 20 durch die dann unterschiedliche Kraftwirkung an den Feder-Anlagepunkten 26, 28.

Das Fahrpedal 10 weist einen Sensor 30 auf, der gebildet ist aus einem feststehend mit dem Grundelement 12 verbundenen Erfassungselement 32 und zwei am Gleichlaufelement 20 angeordneten Indexelementen 36, 38.

Der Sensor 30 ist als zwei-kanaliger induktiver Linearsensor ausgebildet und vorgesehen zur Erfassung der Position der Indexelemente, 36, 38 gegenüber Spulenanordnungen 40, 42 am Erfassungselement.

Wie in Fig. 3 gezeigt, umfassen die Spulenanordnungen 40, 42 jeweils mehrere räumlich über den Erfassungsbereich verteilte Spulen, davon mindestens eine Erreger- und eine Empfängerspule. Durch elektrische Schaltungen 46, 48 werden jeweils in die Erregerspule(n) Signale eingekoppelt. Die Indexelemente 36, 38, die bevorzugt als Schwingkreis ausgebildet sind, bewirken eine positionsabhängige induktive Überkopplung in die jeweilige Empfängerspule, so dass durch die elektrischen Schaltungen 46, 48 die Position des jeweiligen Indexelements 36, 38 ermittelt und ein entsprechendes Positionssignal ausgegeben werden kann. Dabei liefert eine erste Spulenanordnung 40 und Auswerteschaltung 46 ein erstes Sensorsignal P1 entsprechend der Stellung des ersten Indexelements 36 und eine zweite Spulenanordnung 42 mit Auswerteschaltung 48 ein zweites Sensorsignal P2 entsprechend der Position des zweiten Indexelements 38. Ein Beispiel eines solchen induktiven Linearsensors ist in der WO 03/038379 A1 beschrieben.

Wie in Fig. 1, Fig. 2, Fig. 4 gezeigt sind die Indexelemente 36, 38 an voneinander beabstandeten Stellen des Gleichlaufelements 20 angeordnet. Bei ordnungsgemäßer Funktion beider Rückstellelemente 16, 18 bewegt sich das Gleichlaufelement 20 bei Betätigung der Pedalplatte 14 im Betätigungsbereich entlang des Erfassungsbereiches des Sensors 30, d. h. die Indexelemente 36, 38 bewegen sich entlang der Spulenschaltkreise 40, 42.

Dabei bleibt das Gleichlaufelement 20 aufgrund der gleichzeitigen Einwirkung beider Rückstellelemente 16, 18 in der Gleichlauflage (Fig. 1, Fig.2), so dass die Bewegung der Indexelemente 36, 38 synchron erfolgt und die Sensorsignale P1, P2 in gleicher Weise variieren.

Wenn das Gleichlaufelement 30 im Fall des Defekts eines Rückstellelements (Fig. 4) aus der Gleichlauflage verkippt wird, bewegen sich hingegen die Indexelemente 36, 38 nicht synchron gegenüber den Spulenschaltkreisen 40, 42. In diesem Fall weichen die Sensorsignale P1, P2 voneinander ab.

Die Sensorsignale P1, P2 werden wie in Fig. 3 gezeigt durch eine Signalauswertung 50 verarbeitet. Die Signalauswertung 50 kann am Fahrpedal 10 angeordnet sein, ebenso ist es aber auch möglich, dass die Signalauswertung 50 extern, bspw. im Motorsteuergerät vorgesehen ist.

Die Signalauswertung 50 vergleicht die Signale P1, P2. Sind diese identisch bzw. liegen sie innerhalb einer als akzeptabel voreingestellten Toleranzschwelle einer Abweichung voneinander, so signalisiert dies die ordnungsgemäße Funktion der Rückstellelemente 16, 18. In diesem Fall gibt der Sensor 30 als Ausgangssignal A die derzeitige Betätigungsstellung, d. h. Position der Pedalplatte 14 aus, die aus den Signalen P1, P2 bekannt ist.

Im Fall eines Defekts, bspw. des in Fig. 4 gezeigten Federbruchs, stellt die Signalauswertung 50 eine Abweichung der Ausgangssignale P1, P2 fest, die oberhalb der voreingestellten Toleranzschwelle liegt. In diesem Fall wird ein Defekt erkannt.

Der Defekt kann auf verschiedene Weise durch den Sensor 30 signalisiert werden, bspw. im Ausgangssignal A oder durch separate Erzeugung eines Fehlersignals.

## Patentansprüche

1. Fahrzeugpedal mit
- einem Grundelement (12) und einem daran angeordneten Betätigungselement (14), wobei das Betätigungselement (14) gegenüber dem Grundelement (12) in einem Betätigungsbereich zwischen einer Grundstellung und einer Vollbetätigungsstellung auslenkbar ist,
- und mindestens einem ersten und einem zweiten Rückstellelement (16, 18) zur Rückstellung des Betätigungselements (14),
**dadurch gekennzeichnet, dass**
- ein Gleichlaufelement (20) vorgesehen ist, auf das die Rückstellelemente (16), (18) an voneinander im Abstand angeordneten Ansatzpunkten (26, 28) so wirken, dass es eine Gleichlauflage einnimmt, und dass bei einem Defekt eines der Rückstellelemente (16, 18) das Gleichlaufelement (20) aus der Gleichlauflage ausgelenkt wird, wobei
- das Gleichlaufelement (20) so angeordnet ist, dass es der Bewegung des Betätigungselements (14) gegenüber dem Grundelement (12) folgt,
- und das Fahrzeugpedal eine Lageerfassungsvorrichtung (30) umfasst, um die Erfassung der Lage des Gleichlaufelements (20) zu ermöglichen.

2. Fahrzeugpedal nach Anspruch 1, bei dem
- ein erster Betätigungssensor (36, 40, 46) für die Stellung eines ersten Teils (36) des Gleichlaufelements (20) und
- ein zweiter Betätigungssensor (38, 42, 48) für die Stellung eines zweiten Teils (38) des Gleichlaufelements (20) vorgesehen sind, wobei
- bei der synchronen Belegung des Gleichlaufelements (20) mit der Bewegung des Betätigungselements (14) die Betätigungssensoren (36, 40, 46; 38, 42, 48) jeweils als Betätigungssensor für das Betätigungselement (14) dienen, um die Betätigungsstellung des Betätigungselements (14) innerhalb des Betätigungsbereichs zu ermitteln.

3. Fahrzeugpedal nach Anspruch 1 oder 2, bei dem
- das Gleichlaufelement (20) sich bei Bewegung des Betätigungselements (14) gegenüber dem Grundelement (12) bewegt,
- und die Lageerfassungsvorrichtung (30) einen ersten Betätigungssensor (36, 40, 46) für die Stellung eines ersten Teils (36) des Gleichlaufelements (20) und einen zweiten Betätigungssensor (38, 42, 48) für die Stellung eines zweiten Teils (38) des Gleichlaufelements (20) aufweist,
- und wobei die Lage des Gleichlaufelements (20) aus einem Vergleich der Signale (P1, P2) des ersten und zweiten Betätigungssensors ermittelbar ist.

4. Fahrzeugpedal nach einem der vorangehenden Ansprüche, bei dem
- die Rückstellelemente (16, 18) mindestens in parallelen Richtungen auf das Gleichlaufelement (20) so wirken, dass das Gleichlaufelement (20) bei Einwirkung beider Rückstellelemente (16, 18) in einer Gleichlauflage quer zur Wirkrichtung der Rückstellelemente (16, 18) steht,
- wobei bei einem Defekt an einem der Rückstellelemente (16, 18) das Gleichlaufelement (20) aus der Gleichlauflage verkippt wird.

5. Fahrzeugpedal nach einem der vorangehenden Ansprüche, bei dem
- die Rückstellelemente (16, 18) jeweils mindestens ein Federelement aufweisen.

6. Fahrzeugpedal nach einem der vorangehenden Ansprüche, bei dem
- die Rückstellelemente (16, 18) jeweils mindestens ein Dämpfungselement aufweisen.

7. Fahrzeugpedal nach einem der vorangehenden Ansprüche, bei dem
- ein Sensor (30) für eine Betätigungsstellung des Betätigungselements (14) vorgesehen ist.

8. Fahrzeugpedal nach Anspruch 7, bei dem
- der Sensor (30) zwei voneinander unabhängige Sensorelemente (40, 46; 42, 48) aufweist,
- wobei die Lageerfassungsvorrichtung (30) dazu ausgebildet ist, die Signale (P1, P2) der beiden Sensorelemente zu vergleichen.

9. Fahrzeugpedal nach einem der vorangehenden Ansprüche, bei dem
- ein Sensor (30) mindestens ein Indexelement (36, 38) aufweist, das gegenüber mindestens einem Erfassungselement (32) beweglich ist.

10. Fahrzeugpedal nach Anspruch 9, bei dem
- der Sensor (30) ein induktiver Sensor ist, bei dem entlang des Erfassungselements (32) mindestens eine Erregerspule und mindestens eine Empfängerspule angeordnet sind, wobei das Indexelement (36, 38) abhängig von seiner Position eine veränderliche induktive Kopplung bewirkt.

11. Fahrzeugpedal nach einem der Ansprüche 9, 10, bei dem
- das Indexelement (36, 38) am Gleichlaufelement (20) angebracht ist.

12. Fahrzeugpedal nach einem der Ansprüche 9, 10, bei dem
- das Erfassungselement (32) am Gleichlaufelement (20) angebracht ist.

13. Verfahren zum Betrieb eines Fahrzeugpedals (10) mit einem Grundelement (12) und einem daran angeordneten Betätigungselement (14), wobei das Betätigungselement (14) gegenüber dem Grundelement (12) in einem Betätigungsbereich zwischen einer Grundstellung und einer Vollbetätigungsstellung auslenkbar ist, und mit mindestens einem ersten und einem zweiten Rückstellelement (16, 18) zur Rückstellung des Betätigungselements (14), bei dem
- die Lage eines Gleichlaufelements (20) überwacht wird, auf das die Rückstellelemente (16, 18) an voneinander im Abstand angeordneten Ansatzpunkten (26, 28) so wirken, dass das Gleichlaufelement (20) in dem Betätigungsbereich eine Gleichlauflage einnimmt, wobei bei einem Defekt eines der Rückstellelemente (16, 18) das Gleichlaufelement (20) aus der Gleichlauflage ausgelenkt wird, wobei
- das Gleichlaufelement (20) der Bewegung des Betätigungselements (14) gegenüber dem Grundelement (12) folgt,
- und wobei bei einer vorgegebenen Abweichung von der Gleichlauflage ein Defekt signalisiert wird.

## Claims

1. A vehicle pedal having
- a base element (12) and an actuating element (14) arranged thereon, wherein the actuating element (14) can be deflected with respect to the base element (12) in an actuating range between a basic position and a full actuation position,
- and at least one first and one second resetting element (16, 18) for resetting the actuating element (14),
**characterized in that**
- there is provided a synchronizing element (20) upon which the resetting elements (16), (18) act at attachment points (26, 28) arranged at a distance from one another such that said synchronizing element takes up a synchronization position and that, in the event of a defect in one of the resetting elements (16, 18), the synchronizing element (20) is deflected from the synchronization position, wherein
- the synchronizing element (20) is arranged such that it follows the movement of the actuating element (14) with respect to the base element (12),
- and the vehicle pedal includes a position detecting device (30), in order to facilitate the detection of the position of the synchronizing element (20).

2. The vehicle pedal according to claim 1, in which
- there is provided a first actuating sensor (36, 40, 46) for the positioning of a first part (36) of the synchronizing element (20), and
- there is provided a second actuating sensor (38, 42, 48) for the positioning of a second part (38) of the synchronizing element (20), wherein
- when the synchronizing element (20) moves synchronously with the movement of the actuating element (14), the actuating sensors (36, 40, 46; 38, 42, 48) each act as actuating sensors for the actuating element (14), in order to determine the actuation position of the actuating element (14) within the actuating range.

3. The vehicle pedal according to claim 1 or 2, in which
- the synchronizing element (20) moves during the movement of the actuating element (14) with respect to the base element (12),
- and the position detecting device (30) comprises a first actuating sensor (36, 40, 46) for the positioning of a first part (36) of the synchronizing element (20) and a second actuating sensor (38, 42, 48) for the positioning of a second part (38) of the synchronizing element (20),
- and wherein the position of the synchronizing element (20) can be determined from a comparison of the signals (P1, P2) of the first and second actuating sensors.

4. The vehicle pedal according to one of the preceding claims, in which
- the resetting elements (16, 18) act at least in parallel directions upon the synchronizing element (20) such that, during the action of both resetting elements (16, 18), the synchronizing element (20) is in a synchronization position transversely to the direction of action of the resetting elements (16, 18),
- wherein, in the event of a defect in one of the resetting elements (16, 18), the synchronizing element (20) is tilted out of the synchronization position.

5. The vehicle pedal according to one of the preceding claims, in which
- the resetting elements (16, 18) each comprise at least one spring element.

6. The vehicle pedal according to one of the preceding claims, in which
- the resetting elements (16, 18) each comprise at least one damping element.

7. The vehicle pedal according to one of the preceding claims, in which
- a sensor (30) is provided for an actuation position of the actuating element (14).

8. The vehicle pedal according to claim 7, in which
- the sensor (30) comprises two sensor elements (40, 46; 42, 48) which are independent of one another,
- wherein the position detecting device (30) is configured to compare the signals (P1, P2) of the two sensor elements.

9. The vehicle pedal according to one of the preceding claims, in which
- a sensor (30) comprises at least one index element (36, 38) which can be moved with respect to at least one detecting element (32).

10. The vehicle pedal according to claim 9, in which
- the sensor (30) is an inductive sensor, in which at least one exciting coil and at least one receiving coil are arranged along the detecting element (32), wherein the index element (36, 38) produces a variable inductive coupling as a function of its position.

11. The vehicle pedal according to one of claims 9, 10, in which
- the index element (36, 38) is mounted on the synchronizing element (20).

12. The vehicle pedal according to one of claims 9, 10 in which
- the detecting element (32) is mounted on the synchronizing element (20).

13. A method for operating a vehicle pedal (10) having a base element (12) and an actuating element (14) arranged thereon, wherein the actuating element (14) can be deflected with respect to the base element (12) in an actuating range between a basic position and a full actuation position, and having at least one first and one second resetting element (16, 18) for resetting the actuating element (14), in which
- the position of a synchronizing element (20) is monitored, upon which synchronizing element the resetting elements (16, 18) act at attachment points (26, 28) arranged at a distance from one another such that the synchronizing element (20) takes up a synchronization position in the actuating range, wherein, in the event of a defect in one of the resetting elements (16, 18), the synchronizing element (20) is deflected from the synchronization position, wherein
- the synchronizing element (20) follows the movement of the actuating element (14) with respect to the base element (12),
- and wherein, in the event of a given deviation from the synchronization position, a defect is indicated.

## Revendications

1. Pédale de véhicule, avec
- un élément de base (12) et un élément d'actionnement (14) disposé dessus, l'élément d'actionnement (14) pouvant être dévié par rapport à l'élément de base (12) dans une plage d'actionnement entre une position de base et une position d'actionnement complet,
- et avec au moins un premier et un deuxième élément de rappel (16, 18) pour le rappel de l'élément d'actionnement (14),
**caractérisée en ce**
- **qu'**il est prévu un élément de synchronisation (20) sur lequel les éléments de rappel (16), (18) agissent au niveau de points d'attache (26, 28) disposés de façon espacée entre eux de telle sorte qu'il adopte une position de synchronisation, et en ce que, en cas de fonctionnement défectueux d'un des éléments de rappel (16, 18), l'élément de synchronisation (20) est dévié de la position de synchronisation,
- l'élément de synchronisation (20) étant disposé de telle sorte qu'il suit le mouvement de l'élément d'actionnement (14) par rapport à l'élément de base (12),
- et la pédale de véhicule comprenant un dispositif de détection de position (30) pour permettre la détection de la position de l'élément de synchronisation (20).

2. Pédale de véhicule selon la revendication 1, dans laquelle
- il est prévu un premier capteur d'actionnement (36, 40, 46) pour le positionnement d'une première partie (36) de l'élément de synchronisation (20) et
- un deuxième capteur d'actionnement (38, 42, 48) pour le positionnement d'une deuxième partie (38) de l'élément de synchronisation (20),
- les capteurs d'actionnement (36, 40, 46; 38, 42, 48) servant, lors du mouvement synchrone de l'élément de synchronisation (20) avec le mouvement de l'élément d'actionnement (14), respectivement de capteur d'actionnement pour l'élément d'actionnement (14) afin de déterminer la position d'actionnement de l'élément d'actionnement (14) à l'intérieur de la plage d'actionnement.

3. Pédale de véhicule selon la revendication 1 ou 2, dans laquelle
- l'élément de synchronisation (20) se déplace lors du mouvement de l'élément d'actionnement (14) par rapport à l'élément de base (12),
- et le dispositif de détection de position (30) présente un premier capteur d'actionnement (36, 40, 46) pour le positionnement d'une première partie (36) de l'élément de synchronisation (20) et un deuxième capteur d'actionnement (38, 42, 48) pour le positionnement d'une deuxième partie (38) de l'élément de synchronisation (20),
- et la position de l'élément de synchronisation (20) pouvant être déterminée à partir d'une comparaison des signaux (P1, P2) du premier et du deuxième capteur d'actionnement.

4. Pédale de véhicule selon l'une des revendications précédentes, dans laquelle
- les éléments de rappel (16, 18) agissent sur l'élément de synchronisation (20) au moins dans des directions parallèles de telle sorte que, lors de l'action des deux éléments de rappel (16, 18), l'élément de synchronisation (20) est dans une position de synchronisation transversalement à la direction d'action des éléments de rappel (16, 18),
- l'élément de synchronisation (20) étant basculé hors de la position de synchronisation en cas de fonctionnement défectueux sur un des éléments de rappel (16, 18).

5. Pédale de véhicule selon l'une des revendications précédentes, dans laquelle
- les éléments de rappel (16, 18) présentent respectivement au moins un élément de ressort.

6. Pédale de véhicule selon l'une des revendications précédentes, dans laquelle
- les éléments de rappel (16, 18) présentent respectivement au moins un élément d'amortissement.

7. Pédale de véhicule selon l'une des revendications précédentes, dans laquelle
- il est prévu un capteur (30) pour une position d'actionnement de l'élément d'actionnement (14).

8. Pédale de véhicule selon la revendication 7, dans laquelle
- le capteur (30) présente deux éléments de capteurs (40, 46 ; 42, 48) indépendants l'un de l'autre,
- le dispositif de détection de position (30) étant constitué pour comparer les signaux (P1, P2) des deux éléments de capteur.

9. Pédale de véhicule selon l'une des revendications précédentes, dans laquelle
- un capteur (30) présente au moins un élément d'index (36, 38) qui est mobile par rapport à au moins un élément de détection (32).

10. Pédale de véhicule selon la revendication 9, dans laquelle
- le capteur (30) est un capteur inductif, dans lequel au moins une bobine d'excitation et au moins une bobine réceptrice sont disposées le long de l'élément de détection (32), l'élément d'index (36, 38) provoquant en fonction de sa position un couplage inductif variable.

11. Pédale de véhicule selon l'une des revendications 9, 10, dans laquelle
- l'élément d'index (36, 38) est mis en place sur l'élément de synchronisation (20).

12. Pédale de véhicule selon l'une des revendications 9, 10, dans laquelle
- l'élément de détection (32) est mis en place sur l'élément de synchronisation (20).

13. Procédé de fonctionnement d'une pédale de véhicule (10) avec un élément de base (12) et un élément d'actionnement (14) disposé dessus, l'élément d'actionnement (14) pouvant être dévié par rapport à l'élément de base (12) dans une plage d'actionnement entre une position de base et une position d'actionnement complet, et avec au moins un premier et un deuxième élément de rappel (16, 18) pour le rappel de l'élément d'actionnement (14), dans lequel
- la position d'un élément de synchronisation (20) est surveillée, sur lequel agissent les éléments de rappel (16, 18) au niveau de points d'attache (26, 28) disposés de façon espacée entre eux de telle sorte que l'élément de synchronisation (20) adopte une position de synchronisation dans la plage d'actionnement, l'élément de synchronisation (20) étant dévié à partir de la position de synchronisation en cas de fonctionnement défectueux d'un des éléments de rappel (16, 18),
- l'élément de synchronisation (20) suivant le mouvement de l'élément d'actionnement (14) par rapport à l'élément de base (12),
- et un fonctionnement défectueux étant signalé en cas de divergence prédéfinie par rapport à la position de synchronisation.
